(19)

Europäisches
Patentamt
European
Patent Office
Office européen
des brevets

(11) **EP 1 892 853 A1**

(12) **EUROPEAN PATENT APPLICATION**

(43) Date of publication:
**27.02.2008 Bulletin 2008/09**

(51) Int Cl.:
*H04B 7/26* (2006.01)     *H04Q 7/38* (2006.01)

(21) Application number: **06017360.6**

(22) Date of filing: **21.08.2006**

<table>
<tr><td>

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

</td><td>

(71) Applicant: **SIEMENS AKTIENGESELLSCHAFT 80333 München (DE)**

(72) Inventors:
• **Breuer, Volker 16727 Bötzow (DE)**
• **Raaf, Bernhard 82061 Neuried (DE)**

</td></tr>
</table>

(54) **Method, access node and user equipment for managing radio resources in a radio communications system**

(57)     Access Node, User Equipment and Method for managing radio resources of a user equipment (1) of a plurality of user equipments in a radio communications system (1000) comprising the steps of:
- storing on the user equipment (1) a table, the table comprising of radio resources available to the user equipment (1);
- determining by the user equipment (1) at least one deviation (D), the deviation (D) being at least one synchronisation error between the user equipment (1) and an access node (10);
- selecting by the user equipment (1) using the determined at least one deviation (D) from the table a radio resource, and
- using by the user equipment (1) the selected radio resource for a random access transmission to the access node (10).

FIG 3A  Table

| $D_1$ | $D_2$ | $D_3$ | $\cdots$ | $D_N$ |
|---|---|---|---|---|
| $f_1$ | $f_2$ | $f_3$ | $\cdots$ | $f_N$ |

| $D_1$ | $D_2$ | $D_3$ | $\cdots$ | $D_N$ |
|---|---|---|---|---|
| $t_1$ | $t_2$ | $t_3$ | $\cdots$ | $t_N$ |

EP 1 892 853 A1

# FIG 3B

d

$d_{max}$

$0\ t_1\ \ t_3\ \ t_4\ \ \ \ t_5\ \ \ \ \ t_6\ \ \ \ \ \ \ \ \ \ \ t_n\ \ \ \ \ \ t_{n+L}\ \ \ \ \ \ \ t_M$

$t_2$

| Deviation | Time Interval |
|-----------|---------------|
| $D_1$ | $t_1$ |
| $D_2$ | $t_2$ |
| $\vdots$ | $\vdots$ |
| $D_N$ | $t_M$ |

## Description

### Field of the invention

The invention is used in a communications system to manage the available radio resources and to enable user equipments present to access the communications system in an efficient and quick manner.

### Summary of the invention

One of the most important requirements in a communications system such as 3G (Third Generation) is to reduce the control plane latency and short transition times between the states of a UE (User Equipment) or a MS (Mobile Station). The states of a UE, defined in the GSM (Global System for Mobile Communications) standard and also applicable to other standards like UMTS (Universal Mobile Telecommunications System) and UMTS LTE (Long Term Evolution), are two: idle (or inactive) and active. In an idle state, an UE is registered within the communications system and listens for paging messages. When in an active state, a registered UE is actively communicating within the communications system.

One common way, by which an UE accesses a communications system or changes from an idle state to an active state, where radio resources of the communications system are assigned, is to perform an UL (Uplink) access via a contention channel such as a RACH (Random Access Channel) to a node in the communications system, which in turn provides the radio resources to the UE.

In the event that a plurality of UEs try to access the RACH at the same time, collisions occur and collision resolution mechanisms are implemented in order to resolve them. One such mechanism is that of collision detection wherein signalling from a node is broadcasted resulting in UEs stopping the accessing procedure and each UE then waiting for a time interval (back off period), which is fixed or random, before re-starting the access procedure again. The drawback of this mechanism is that a prolonged transition time from one state to the other is incurred by the different UEs.

This problem becomes more severe in B3G (Beyond 3G) communications systems, as due to the higher bandwidth available more UEs are served at the same time, thus increasing the number of accesses over a RACH, consequently increasing the number of collisions and thus the waiting time to change state. New services being made available to UEs, like MBMS (Multimedia Broadcast/Multicast Service) and packet based services where UEs may not be in an active state between packets or packet sessions, will also increase the number of UEs requesting access via the RACH. Furthermore, with MBMS the RACH is also used for the subscription procedure between a UE and a service provider, further increasing the possible number of collisions.

Additionally, in B3G communications systems, the concept of an area in E-UTRAN (Evolved-Universal Mobile Telecommunications System (UMTS) Terrestrial Radio Access Network) has been introduced. According to this concept, the UE is known to the communications system on an area level, for example in which cell the UE is located, has moved to, or within which URA (UTRAN Registration Area) the UE is located, whereby the URA is an area covered by a number of cells. As UEs have to transmit location update messages whenever they change location, an increase in the number and frequency of these messages being transmitted over the RACH will occur.

As mentioned hereinabove, GSM has two states. In W-CDMA (Wideband-Code Division Multiple Access), besides idle and active states, additional paging states, based on the location knowledge of a UE have been defined, these being URA-PCH (URA-Paging Channel) state and Cell-PCH. These new states also compete for the RACH and suffer from the same drawbacks as mentioned previously.

In B3G communications systems a dormant state of an UE is introduced. This additional state has been introduced due to the fact that different transition times are envisaged for UEs changing from one state to another, as well as a large number of UEs being present (more than 200 UEs) at any one time in the communications system.

A UE must be able to go from an idle state to an active state in 200ms (milli seconds), and from dormant to active in 50ms. This also depends on the knowledge that the communications system has as to the location of a UE in the state it is in at a particular time instant. As all UEs when changing state, irrespective of the state they are in, need the RACH in order to access the communication system, for example, either to request resources or to provide location updates, transition times will increase causing UEs to have to wait longer. Consequently, UEs will have to wait longer for requested resources and furthermore, the timing requirements will not be met. This in turn will cause an increase in signalling due to UEs stopping and starting an access procedure, leading to an inefficient and slow communications system.

The nodes, such as access nodes, receiving the different requests via the transmitted messages are always in control of the access procedures and therefore must have sufficient amounts of processing power to handle requests. UEs on the other hand, do not have a high degree of independence as they are dependent on nodes with regards to an allocation of radio resources.

Additionally, UEs in whichever state they are in travel within the cell they are in at a particular point in time. As a consequence, transmissions over the RACH will be received with a synchronisation error by the node receiving RACH transmissions in the cell. The synchronisation error is basically caused by the round trip time of the affected signals, e.g. RACH signals. Therefore, the node has to use powerful correlation techniques in order to find the RACH for the different positions, consuming in the process, a lot of processing power. Consequently, UEs will have to wait longer for requested resources, and processing hardware at the access nodes will be more complex and the costs of such access nodes will increase.

A need therefore exists, for a technique that can in a simple and efficient manner overcome the above mentioned issues, while at the same time allowing UEs to access a communications system and in an efficient manner to request resources. Furthermore, a need exists for reducing the amount of control of the access procedure from nodes and giving more control to the UEs so that they can act independently within a communications system. Additionally, a need exists for reducing synchronisation errors that transmissions over the RACH are prone to suffer from.

With the present invention, the above mentioned issues are resolved. The proposed technique allows for an improved and simple procedure for allocating a radio resource to user equipment and reduces the time that user equipment needs to wait before a radio resource is allocated, as well as reducing synchronisation errors and the effects they cause on transmissions, thus enabling radio resources to be processed faster and allocated quicker to UEs wherever they are located within a cell. Furthermore, the proposed technique can, through the procedure for allocating a radio resource, anticipate how large synchronisation errors will be and thus allocate resources which suit the expected errors. Thus allowing RACHs to be densely staggered in an optimum manner leading to an optimised performance and a minimised usage of resources.

The technique is achieved by the teachings contained in the independent method, access node and user equipment claims.

Said method claim manages radio of a user equipment of a plurality of user equipments in a radio communications system comprising the steps of:

- storing on said user equipment a table, said table comprising of radio resources available to said user equipment;
- determining by said user equipment at least one deviation, said at least one deviation being at least one synchronisation error between said user equipment and an access node;
- selecting by said user equipment using said determined at least one deviation from said table a radio resource, and
- using by said user equipment said selected radio resource for a random access transmission to said access node.

Said access node has means arranged for managing radio resources, comprising of:

- determining means arranged to determining at least one deviation, said at least one deviation being at least one synchronisation error between said access node and a user equipment of a plurality of user equipments, and
- generating means arranged to generate a table using said determined at least one deviation, said table comprising a mapping said at least one deviation to available radio resources.

Said user equipment of a plurality of user equipments in a radio communications system has means arranged for managing radio resources, comprising of:

- storage means arranged for storing a table, said table comprising of radio resources available to said user equipment;
- determining means arranged to determining at least one deviation, said at least one deviation being at least one synchronisation error between said user equipment and an access node;
- selecting means arranged to selecting from said table using said determined at least one deviation of a radio resource, and
- transceiver means arranged to use said selected radio resource for a random access transmission to said access node.

Preferred embodiments of the invention are described in the dependant claims, wherein:

The synchronisation error is at least one of the following: a time synchronisation error, a frequency synchronisation error, thus allowing the inventive technique to be applicable in time and/or frequency domains and to be more effective and versatile in radio communications systems using a plurality of accessing techniques at least one of which is orthogonal frequency division multiple access.

The radio resources indicate at least one frequency and/or at least one time resource that is to be used by the user equipment when performing said random access transmission. The frequency resource comprising of a number of sub-carriers to be used for the random access transmission, while the time resource comprises of a plurality of time intervals to be used for the random access transmission. The separation between the time intervals increasing as the determined at least one deviation increases. In this way, a user equipment is capable of selecting the appropriate radio resource i.e. a frequency resource or a time resource or both in order to perform the random access transmission.

The at least one deviation is determined using an assigned average speed, thus simplifying the calculations performed by the inventive technique. The average speed is assigned by the user equipment and the access node. The average speed is determined using at least one of the following parameters at an access node and at a user equipment:

> a cell parameter, said cell parameter indicating a speed environment of a cell in which said at least one user equipment is located, a user equipment delay parameter, said user equipment delay parameter indicating a variation in a round trip time delay for transmissions between said at least one user equipment and said at least one access node, a user equipment speed parameter, said user equipment speed parameter indicating an estimated speed during an idle state of said at least one user equipment, a path loss parameter, said path loss parameter indicating a variation in a path loss during an idle state of said at least one user equipment between said at least one user equipment and said at least one access node. Thus allowing both access node and user equipment to use easy to obtain information in order to execute the inventive technique.

The at least one deviation is also determined by the access node, which also then broadcasts the table comprising of a mapping of at least one deviation to available radio resources, thus allowing user equipments not having a stored table to be able to receive such a table and select an appropriate radio resource.

## Short description of the drawings

The present invention will become more apparent from the description and embodiments given herein below and from the accompanying drawings which are given by way of information only, and thus are not limitative of the present invention, and wherein:

Fig. 1          depicts a communications system wherein the inventive technique is applicable.

Fig. 2          depicts a flow diagram showing the steps comprising the inventive technique in a user equipment and an access node.

Fig. 3a and 3b  respectively depict an example of the table used to select the radio resources based upon the determined deviation and the manner in which deviations are arranged in the time domain.

Fig. 4          depicts, in a block diagram form, a user equipment comprising means arranged to execute the inventive technique.

Fig. 5          depicts in a block diagram form, an access node comprising means arranged to execute the inventive technique.

## Detailed description of the invention

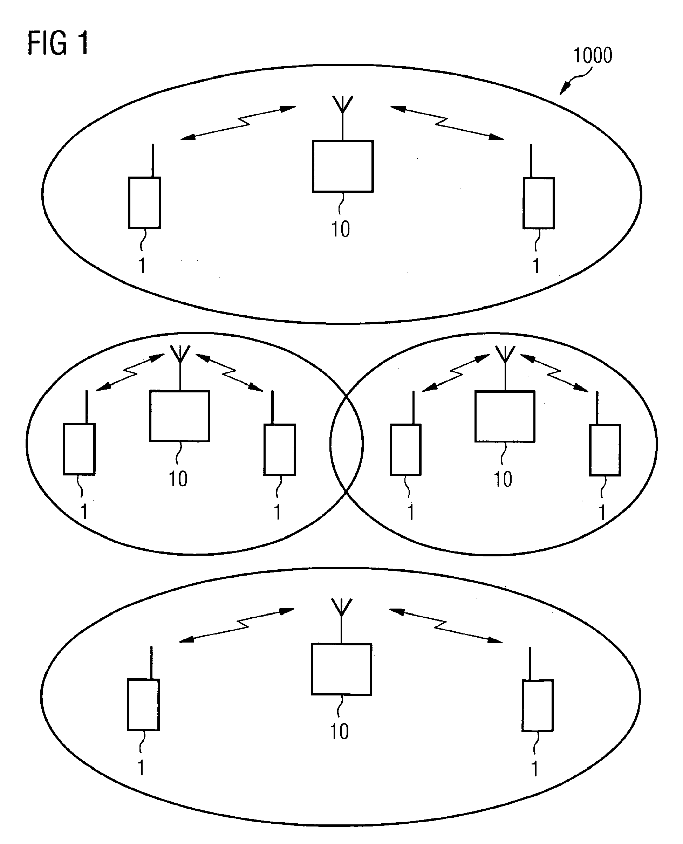

Communications system 1000, wherein the inventive technique is applicable, as depicted in fig. 1, comprises of a number of UEs 1 and a number of access nodes 10. UEs 1, can be mobile stations, computers or any other communications device that allows for connection to a service available by a network operator. Access nodes 10, can be one of the following nodes: a BS (base station), a nodeB (base station node), a BSC (base station controller), a RNC (radio network controller) and are the point at which a UE 1 can connect to the network and consequently to the PSTN (Public Switched Telephone Network), to the Internet or to other available services. For ease of understanding the different means that manage and enable the coupling of an access node 10 to the PSTN/Internet in communications system 1000, for example MSCs (Mobile Switching Centres) are not depicted. However a person skilled in the art, would know of their existence in communications system 1000.
Access nodes 10 and UEs 1, are arranged to use a number of access techniques in order to provide access and connection between them. These techniques can be at least one of the following: code division multiple access (CDMA) techniques, time division multiple access (TDMA) techniques, frequency division multiple access (FDMA) techniques, orthogonal frequency division multiple access (OFDMA) techniques, space-division multiple access (SDMA) techniques, carrier sense multiple access (CSMA) techniques, multi-frequency time division multiple access (MF-TDMA) techniques, wideband-code division multiple access (WCDMA) techniques.

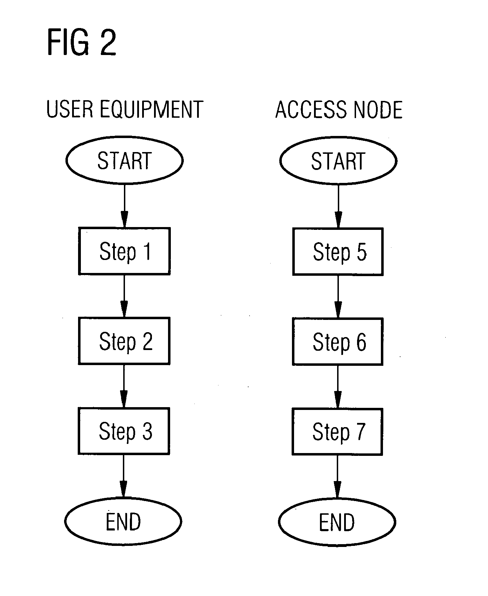

Fig. 2 is a flow diagram showing the steps comprising the inventive technique. In step 1, a table is stored on a UE 1. The stored table comprises of radio resources that are available to UE 1 for use. In step 2, UE 1 determines a deviation D between itself and an access node 10. The determined deviation D being at least one synchronisation error occurring between access node 10 and UE 1. The synchronisation error determined is at least one of the following synchronisation errors: a time synchronisation error, a frequency synchronisation error. Depending on the situation, for example the number of calculations required to determine the deviation D, the amount of processing power required etc., UE 1 can determine one or both of the abovementioned synchronisation errors. In step 3, once the deviation D has been effected, UE 1 then uses the determined deviation D to select a radio resource from the table in order to perform in step 4, a random access transmission to the access node 10.

The radio resources in the table indicate at least one frequency and/or at least one time resource to be used by UE 1 when performing the random access transmission.

The step of determining deviation D further comprises of step 2a, whereby UE 1 assigns to itself an average speed. UE 1 determines the average speed by using at least one of the following parameters: a cell parameter, a user equipment delay parameter, a user equipment speed parameter, a path loss parameter.

The cell parameter indicates the speed environment of the cell in which the UE 1 is located and/or the maximum speed of an UE 1 that is possible in that cell. Depending, for example, on the number of UEs present, on the rate of change of the number of UEs present, on the location of the cell, the cell parameter indicates that the speed environment of the cell is a high one, i.e. UEs in that cell have a high speed, or a low one, i.e. UEs in that cell have a low speed and/or the maximum speed possible for an UE 1 in the cell. For example, in a cell situated on a high speed road, such as an expressway, a motorway or a high speed railway route, access node 10, controlling the cell, can determine that the speed environment is high and/or determine the maximum possible speed of UEs within the cell. In a cell situated in a city centre or shopping mall, access node 10, controlling the cell, can determine that the speed environment is low and/or determine the maximum possible speed of UEs within the cell. When determining the maximum speed within the cell, access node 10 can use techniques such as Doppler Effect measurements on received transmissions from UEs to determine the speed of the UEs and from there the maximum speed possible within the cell. In this way, it is not necessary to explore the cell environment in order to determine the maximum speed, but the maximum speed can be determined from measurements taken once the cell has gone into operation, as this can be done automatically without the need of any operator involvement. Once the maximum speed for the cell has been determined, access node 10 can then assign an average speed to the UE 1.

The user equipment delay parameter indicates the variation in the round trip time delay for transmissions between an access node 10 and UE 1. UE 1, measures, for example, the time taken to receive a transmission from an access node 10 after a transmission from UE 1 to access node 10. This can be done by noting the time at transmission and then at reception. From the difference a round trip time can be generated. Over time UE 1 can perform a number of such measurements and from the measurements generated can determine the variation in the round trip time delay and then generate the corresponding user equipment delay parameter. Once the variation of the round trip delay parameter is determined, UE 1 can assign an average speed. Alternatively, access node 10 can transmit to the UE 1 information regarding the reception timing and the UE 1 can in turn adapt its transmission accordingly. The transmitted information is also known as a timing advance, and can be evaluated at the access node 10 or can be determined by the UE 1 and signalled to the access node 10.

The user equipment speed parameter indicates an estimated speed of a UE 1 during an idle state of UE 1. During an idle state UE 1 gathers fading and delay spread statistics determined from location update and/or control transmissions sent by access node 10 and determines an average speed.

The path loss parameter indicates a variation in the path loss suffered by a transmission of a UE 1 during an idle state of UE 1. Access node 10, measures the path loss over successive transmissions from UE 1, such as location update and/or control transmissions, and can determine whether the UE 1 is moving away from access node 10 if the path loss variation increases or is moving towards the access node 10 if the path loss variation decreases. From the variation of the path loss access node then determines an average speed for the UE 1.

Additionally, UE 1 can also determine an average speed using the abovementioned parameters as well as using GPS (Global Positioning System). UE 1 gathers fading and/or delay spread statistics and/or path loss measurements determined singly or in combination from location update requests, control, or broadcast transmissions sent by node 10 and measures the time taken to receive a transmission from node 10 after a transmission from UE 1 to access node 10. By using, for example, GPS, path loss parameter and/or Doppler Effect measurements, UE 1 can determine its location and its distance from access node 10, and assign an average speed to itself. Afterwards, UE 1 can signal this average speed or any other parameters used to derive the average speed to access node 10.

As mentioned hereinabove, UE 1 determines the average speed by using at least one of the abovementioned parameters. Once the average speed has been determined, UE 1 uses it in order to determine deviation D in step 2.

Additionally, the determination of deviation D is also performed by access node 10 in step 5. Access node 10 determines a deviation for each UE 1 that is present within its cell. This determination is performed independently from the one done by UE 1. Furthermore, the determination is performed periodically, continuously or if a certain threshold is reached, for example, a predefined number of UEs is reached and/or surpassed, or a predefined time period is reached during which no new parameters, such as those mentioned hereinabove, were measured.

The deviation D is determined, by UE 1 and access node 10, using the following formula:

$$D = ((v_{average}) \times (t_{idle})) / c$$

Wherein, $v_{average}$ is the determined average speed, $t_{idle}$ is the time that UE 1 is idle and c is the speed of light. The idle time $t_{idle}$ of a UE 1 is determined by measuring the time between active states of UE 1, during which only location updates and/or control transmissions are sent from UE 1 to access node 10. Both UE 1 and access node 10 have control means 140, 14 arranged respectively to measure this time.

In a further embodiment of the invention, access node 10 upon determining the deviation D for each UE 1, generates the table with the radio resource mappings in step 6 and then broadcasts it in step 7. In this way, UEs 1 that do not have a table stored, can receive it and using their own determined deviation D, select the appropriate radio resource in order to perform the random access transmission. Such UEs 1 can store the received table for future use if required or can wait to use a broadcasted table when necessary.

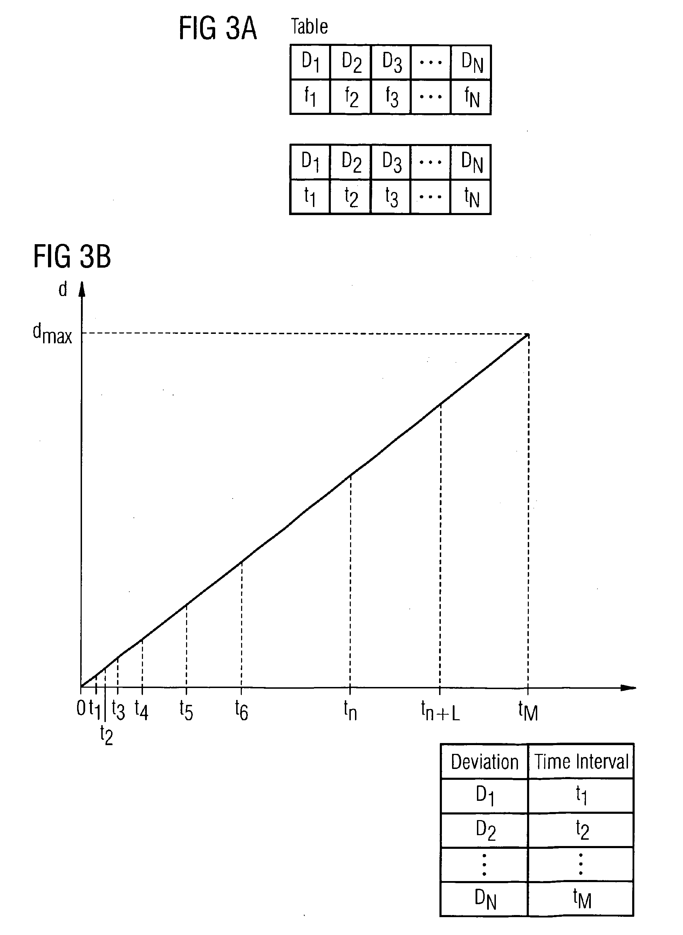

Fig. 3a shows an example of the table that is stored in UE 1 or transmitted by access node 10. The table comprises of a row corresponding to various deviations $D_1, D_2,...D_N$ and of a row corresponding to the radio resources available $f_1, f_2,...f_N$, in this case sub-carriers from the bandwidth used by UE 1 for transmitting. A number of sub-carriers are assigned for each deviation D. For example, for deviation $D_1$ the corresponding radio resource is $f_1$. Radio resource $f_1$ in turn comprises of information indicating the sub-carriers to be used, for example $f_1$:(sub 1, sub 2, sub 3), indicating that sub-carrier number 1, 2 and 3 are to be used for deviation $D_1$. The number of sub-carriers assigned to a particular deviation D can vary. Alternatively, the table can comprise, instead of frequency resources as described above, time resources. These time resources indicate the time intervals $t_1, t_2.. t_M$ that a transmission should be made for a particular deviation. It is also possible for the table to comprise of both frequency and time resources. In particular, the separation in time between the time intervals $t_1,.. t_M$ increases as the deviation D increases.

In the above example the deviations $D_1, D_2,...D_N$ comprised in the table represent individual deviation values of a time synchronisation error and/or a frequency synchronisation error. In a further refinement of the above, the deviations $D_1, D_2,...D_N$ that are comprised in the table represent a range of values of synchronisation errors.

Fig. 3b further explains the manner in which the time intervals are arranged. The assigned timing intervals are separated from each other in time. The separation between the timing instances increases as the calculated deviations increase. As shown in the figure, the horizontal axis corresponds to the time axis indicating the timing intervals, while the vertical axis corresponds to the distance from access node 10, $d_{max}$ being the maximum distance from access node 10 that a UE 1 can still receive a transmission.

The calculated deviations also depend on the distance of a UE 1 from access node 10. The closer a UE 1 is to access node 10 the smaller the deviation D, the further away the larger the deviation D. The smaller the deviation D the closer a UE 1 is to access node 10, indicating that the UE is better synchronised with access node 10 than a large deviation D. Therefore, the initial timing intervals, for example $t_1, t_2, t_3$ corresponding to deviations $D_1, D_2, D_3$ are placed close together. As deviations grow, that is UE 1 is less and less synchronised with access node 10, the timing intervals are placed further and further apart from each other, for example $t_4, t_5, t_6, t_M$.

The timing intervals $t_1,..., t_M$ indicate when during the timeslot used to access the RACH the UE 1 can transmit a request, i.e. the timing intervals indicate when within the timeslot the radio resources are available.

In a further refinement of the inventive technique, the differences in time between timing instances e.g. $t_n$, and $t_{n+1}$ increase monotonically with n, where n is a time period between two successive time intervals t. This simplifies the calculations performed. It must be noted however that the monotonical increase is not always necessary, but can depend on the number and values of the calculated synchronisation errors. As mentioned hereinabove, both UE 1 and access node 10, determine the deviation D. The timing intervals enable UEs to access the RACH with radio resources that are compatible with the expected synchronisation error. For example, $t_6$ is used if UE 1 suffers a large synchronisation error, i.e. $D_6$, while $t_2$ is used if UE 1 suffers from a small synchronisation error $D_2$.

As mentioned hereinabove, the calculated deviation relates to at least one synchronisation error occurring between access node 10 and UE 1. In the above example of an illustrative embodiment, the deviation of a time synchronisation error was calculated and used to then allocate the radio resources. Alternatively, the deviation of a frequency synchronisation error occurring between access node 10 and UE 1 can be calculated and used to then allocate the radio resources.

In a further refinement of the inventive technique, as over time the synchronisation error increases, a UE 1 can initially use a more stringent or tight resource selection, wherein for example, the resources used compensate specific calculated deviations D. At a later point in time, UE 1 can change to a less stringent or more spacious resource selection to compensate for the larger deviations D occurring, wherein for example, resources selected compensate for a range of calculated deviations D.

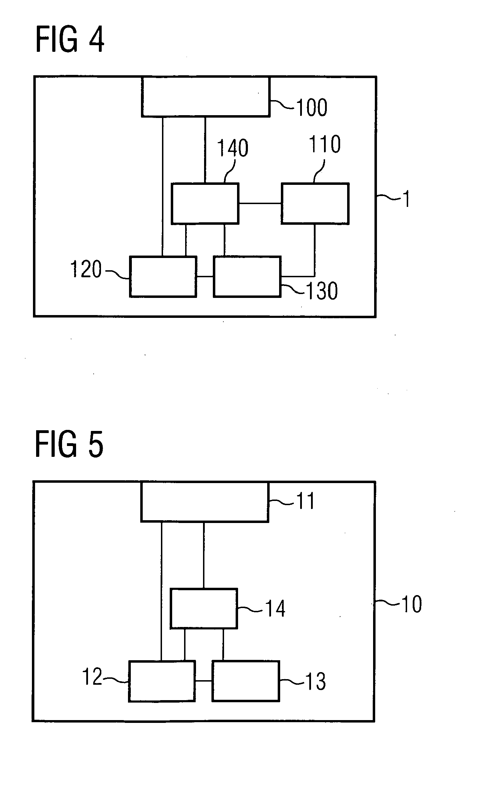

Fig. 4 depicts, in block diagram form, a UE 1 comprising means arranged to execute the inventive technique. UE 1 comprises of storage means 110 arranged to store a table, such as a memory card, determining means 120 arranged to determine a deviation D, the deviation D being at least one synchronisation error between UE 1 and an access node 10. Selecting means 130 arranged to select a radio resource from the table with the aid of the determined deviation D, and transceiver means 100 arranged to use the selected radio resource for a random access transmission to access node 10.

Transceiver means 100 are also further arranged to receive the table over a broadcast channel. UE 1 further comprises control means 140 arranged to implement the refinements of the inventive technique.

Fig. 5 depicts, in block diagram form, an access 10 comprising means arranged to execute the inventive technique. Access node 10 comprises of determining means 12 arranged to determine at least one deviation D, the deviation D being at least one synchronisation error between access node 10 and a UE 1 of a plurality of UEs. Generating means 13 are arranged to generate a table using the determined at least one deviation D, the table comprising of a mapping of the at least one deviation to the available radio resources. Access node 10 further comprises of transceiver means 11 arranged to broadcast said table once it is generated. Access node 10 further comprises control means 14 arranged to implement the refinements of the inventive technique.

The inventive technique described hereinabove is additionally advantageous as it enables the coexistence of synchronised and unsynchronised UEs 1 within a radio communications system 1000. Both synchronised and unsynchronised UEs 1 can send requests for access on the RACH using same set of radio resources. This sharing of resources between synchronised and unsynchronised UEs 1 utilises a trunking gain and thus enables the radio resources to be use more efficiently.

Both synchronised and unsynchronised UEs 1 can send their RACH requests on the shared radio resources, each UE 1 using the stored tables to select the appropriate radio resource. If UEs 1 do not have such a table, they will use the broadcasted table, transmitted by access node 10.

The above described examples have been described in the time domain i.e. the transmissions of the UEs are spread in the time domain due to different timing errors or round trip delays. Similarly the inventive technique can also be applied in the frequency domain, as will be apparent to persons skilled in the art. In this case, UE 1 transmits a transmission that is not well aligned in frequency when received at access node 10. This may occur for example because the UE 1 does not have a good frequency reference, either from an external source or from a highly accurate internal source. In this case the problem is solved by UE 1 analyzing the signals received from access node 10 and determining a synchronisation error in the frequency domain. Once this has been determined UE 1 can select the appropriate frequency from the table.

In this way, instead of having to receive a correction factor from an access node 10, such as a timing advance in order for UEs 1 to compensate and correct their synchronisation error, a UE 1 can transmit a request over the RACH and/or at a later stage over another channel to access node 10 without correcting the synchronisation error when transmitting. The selection of the appropriate radio resource depending on the determined deviation D, enables the transmission to be correctly received at access node 10. As mentioned previously, access node 10 also determines deviations D for UEs 1 that communicate with it, upon receiving a transmission, such as a RACH request, it will determine the deviation D of the received transmissions and then using the generated table compensate and correct the synchronisation error present.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for managing radio resources of a user equipment (1) of a plurality of user equipments in a radio communications system (1000) comprising the steps of:

    - storing on said user equipment (1) a table, said table comprising of radio resources available to said user equipment (1);
    - determining by said user equipment (1) at least one deviation (D), said deviation (D) being at least one synchronisation error between said user equipment (1) and an access node (10);
- selecting by said user equipment (1) using said determined at least one deviation (D) from said table a radio resource, and
- using by said user equipment (1) said selected radio resource for a random access transmission to said access node (10) .

2. Method according to claim 1, wherein said at least one synchronisation error is at least one of the following: a time synchronisation error, a frequency synchronisation error.

3. Method according to claims 1 or 2, wherein said radio resources indicate at least one frequency resource and/or at least one time resource to be used by said user equipment (1).

4. Method according to claim 3, wherein said at least one frequency resource comprises of a number of sub-carriers to be used for said random access transmission and/or said at least one time resource comprises of a plurality of time intervals $(t_1,..., t_M)$ to be used for said random access transmission.

5. Method according to claim 4, wherein a separation in time between said time intervals $(t_1... t_M)$ increases as said deviation (D) increases.

6. Method according to any one of the previous claims 1 to 5, wherein said step of determining said at least one deviation (D) further comprises the step of said user equipment (1) assigning itself an average speed, said assigned average speed being used in determining said deviation (D).

7. Method according to claim 6, wherein said average speed is determined by using at least one of the following parameters: a cell parameter, said cell parameter indicating a speed environment of a cell in which said user equipment (1) is located,
a user equipment delay parameter, said user equipment delay parameter indicating a variation in a round trip time delay for transmissions between said user equipment (1) and said access node (10),
a user equipment speed parameter, said user equipment speed parameter indicating an estimated speed during an idle state of said user equipment (1),
a path loss parameter, said path loss parameter indicating a variation in a path loss during an idle state of said user equipment (1) between said user equipment (1) and said access node (10).

8. Method according to any one of the previous claims 1 to 7, wherein said step of determining said at least one deviation (D) is also executed by said access node (10).

9. Method according to any one of the previous claims 1 to 8, wherein upon determining said at least one deviation (D) said access node (10) generates said table.

10. Method according to claim 9, wherein upon generating said table, said access node (10) broadcasts said table.

11. Method according to any one of the previous claims 1 to 9, wherein said table further comprises of a mapping of said at least one deviation (D) to available radio resources.

12. Method according to any one of the previous claims 1 to 10, wherein at least an orthogonal frequency division multiple access technique is used for said random access transmission.

13. User equipment (1) of a plurality of user equipments in a radio communications system (1000) having means arranged for managing radio resources, comprising of:

- storage means arranged for storing a table, said table comprising of radio resources available to said user equipment (1);
- determining means arranged to determining at least one deviation (D), said at least one deviation (D) being at least one synchronisation error between said user equipment (1) and an access node (10);
- selecting means arranged to selecting from said table using said determined at least one deviation (D) of a radio resource, and
- transceiver means arranged to use said selected radio resource for a random access transmission to said access node (10).

**14.** User equipment (1) according to claim 12, wherein said transceiver means are further arranged to receive said table over a broadcast channel.

**15.** Access node (10) having means arranged for managing radio resources, comprising of:

- determining means arranged to determining at least one deviation (D), said at least one deviation (D) being at least one synchronisation error between said access node (10) and a user equipment (1) of a plurality of user equipments, and
- generating means arranged to generate a table using said determined at least one deviation (D), said table comprising a mapping of said at least one (D) to available radio resources.

**16.** Access node (10) according to claim 14, wherein said access node (10) further comprises of transceiver means arranged to broadcast said table.

**17.** Radio communications system (1000) comprising at least one user equipment (1) according to claims 12 to 13 and at least one access node (10) according to claims 14 to 15.

FIG 1

# FIG 2

USER EQUIPMENT

ACCESS NODE

## FIG 3A

Table

| D$_1$ | D$_2$ | D$_3$ | $\cdots$ | D$_N$ |
|-------|-------|-------|----------|-------|
| f$_1$ | f$_2$ | f$_3$ | $\cdots$ | f$_N$ |

| D$_1$ | D$_2$ | D$_3$ | $\cdots$ | D$_N$ |
|-------|-------|-------|----------|-------|
| t$_1$ | t$_2$ | t$_3$ | $\cdots$ | t$_N$ |

## FIG 3B

| Deviation | Time Interval |
|-----------|---------------|
| D$_1$ | t$_1$ |
| D$_2$ | t$_2$ |
| $\vdots$ | $\vdots$ |
| D$_N$ | t$_M$ |

FIG 4

FIG 5

**European Patent Office**

## EUROPEAN SEARCH REPORT

Application Number

EP 06 01 7360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 211 907 A (MATSUSHITA ELECTRIC IND CO LTD [JP]) 5 June 2002 (2002-06-05) <br> * claims 4,5 * <br> * paragraph [0018] * <br> * paragraph [0027] * <br> * paragraphs [0041] - [0043] * <br> * paragraphs [0056] - [0061] * | 1-17 | INV. <br> H04B7/26 <br> H04Q7/38 |
| Y | WO 97/12451 A (ERICSSON TELEFON AB L M [SE]) 3 April 1997 (1997-04-03) <br> * page 3, line 18 - page 4, line 20 * | 1-17 | |
| Y | US 2005/025095 A1 (KIM HOE-WON [KR]) 3 February 2005 (2005-02-03) <br> * paragraph [0018] * | 1-17 | |
| Y | US 2005/227630 A1 (KOMAILI JALEH [US] ET AL) 13 October 2005 (2005-10-13) <br> * paragraph [0010] * | 2 | |
| Y | GB 2 318 026 A (MOTOROLA LTD [GB]) 8 April 1998 (1998-04-08) | 3 | TECHNICAL FIELDS SEARCHED (IPC) |
| A | * page 3, lines 9-29 * | 1,2,4-17 | H04B <br> H04Q |
| Y | US 2004/087277 A1 (EDGE STEPHEN WILLIAM [US] ET AL) 6 May 2004 (2004-05-06) <br> * paragraph [0048] * | 6 | |
| A | EP 0 295 227 A1 (ERICSSON TELEFON AB L M [SE]) 14 December 1988 (1988-12-14) <br> * the whole document * | 1-17 | |
| A | WO 96/01534 A2 (PHILIPS ELECTRONICS NV [NL]; PHILIPS NORDEN AB [SE]; PHILIPS PATENTVER) 18 January 1996 (1996-01-18) <br> * the whole document * | 1-17 | |

The present search report has been drawn up for all claims

| Place of search | Date of completion of the search | Examiner |
|---|---|---|
| The Hague | 12 February 2007 | Hegeman, Hans |

EPO FORM 1503 03.82 (P04C01)

## ANNEX TO THE EUROPEAN SEARCH REPORT
## ON EUROPEAN PATENT APPLICATION NO.

EP 06 01 7360

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2007

| Patent document cited in search report | | Publication date | Patent family member(s) | | Publication date |
|---|---|---|---|---|---|
| EP 1211907 | A | 05-06-2002 | AU | 7108101 A | 13-02-2002 |
| | | | CN | 1383695 A | 04-12-2002 |
| | | | WO | 0211480 A1 | 07-02-2002 |
| | | | JP | 3583355 B2 | 04-11-2004 |
| | | | JP | 2002044720 A | 08-02-2002 |
| | | | US | 2003130011 A1 | 10-07-2003 |
| WO 9712451 | A | 03-04-1997 | AU | 7151096 A | 17-04-1997 |
| | | | DE | 69611684 D1 | 01-03-2001 |
| | | | DE | 69611684 T2 | 17-05-2001 |
| | | | EP | 0852854 A1 | 15-07-1998 |
| | | | US | 5642355 A | 24-06-1997 |
| US 2005025095 | A1 | 03-02-2005 | CN | 1581729 A | 16-02-2005 |
| | | | KR | 20050014596 A | 07-02-2005 |
| US 2005227630 | A1 | 13-10-2005 | EP | 1738476 A2 | 03-01-2007 |
| | | | WO | 2005104388 A2 | 03-11-2005 |
| GB 2318026 | A | 08-04-1998 | AU | 4206997 A | 05-05-1998 |
| | | | WO | 9816025 A1 | 16-04-1998 |
| US 2004087277 | A1 | 06-05-2004 | NONE | | |
| EP 0295227 | A1 | 14-12-1988 | DE | 3868701 D1 | 09-04-1992 |
| | | | DK | 317488 A | 12-12-1988 |
| | | | FI | 882611 A | 12-12-1988 |
| | | | SE | 455750 B | 01-08-1988 |
| WO 9601534 | A2 | 18-01-1996 | CN | 1131485 A | 18-09-1996 |
| | | | DE | 69532793 D1 | 06-05-2004 |
| | | | DE | 69532793 T2 | 17-03-2005 |
| | | | HK | 1013749 A1 | 14-01-2005 |
| | | | JP | 9502850 T | 18-03-1997 |
| | | | US | 5654960 A | 05-08-1997 |

EPO FORM P0459

For more details about this annex : see Official Journal of the European Patent Office, No. 12/82